# EUROPEAN PATENT APPLICATION

(11) **EP 4 675 318 A1**
(43) Date of publication of application: **07.01.2026**
(21) Application number: 24209596.6
(22) Date of filing: 29.10.2024
(51) Int. Cl.: G02B 5/00, G02B 27/00

(54) **LIGHT-SHIELDING MEMBER, CAMERA MODULE, AND ELECTRONIC DEVICE**

(30) Priority: 05.07.2024 CN 202410895195
(71) Applicant: Jiangxi OFILM Optical Co. Ltd., Nanchang, Jiangxi 330096 (CN)
(72) Inventor: WU, Junfu, Nanchang, Jiangxi, 330096 (CN)
(74) Representative: Santarelli

(57) **Abstract**

A light-shielding member, a camera module, and an electronic device are provided. The light-shielding member includes a light-shielding body and a sawtooth structure. The light-shielding body has a first end surface and a second end surface opposite to the first end surface, and the light-shielding body defines a light-transmitting hole extending through the first end surface and the second end surface. The sawtooth structure is disposed on a wall of the light-transmitting hole, and a cross-section of the sawtooth structure taken along a direction perpendicular to a thickness direction of the light-shielding member is a sawtooth cross-section. The sawtooth cross-section has alternating peaks and valleys disposed in a circumferential direction of the light-transmitting hole. The sawtooth cross-section has a first sawtooth edge and a second sawtooth edge between two adjacent peaks, and an extending direction of the first sawtooth edge is directed to a center of the light-transmitting hole.

## Description

### TECHNICAL FIELD

The present disclosure relates to the field of optical imaging technology, and in particular, to a light-shielding member, a camera module, and an electronic device.

### BACKGROUND

In recent years, there is an increasing demand for camera module among users. In the meantime, innovations and breakthroughs have been made constantly in the field of the camera module to reduce stray light. However, how to improve stray light reduction effect of light-shielding members is a major challenge.

### SUMMARY

In light of the above, the disclosure aims to provide a light-shielding member, a camera module, and an electronic device, thereby improving stray light reduction effect of the light-shielding member.

In a first aspect, embodiments of the disclosure provide a light-shielding member. The light-shielding member includes a light-shielding body and a sawtooth structure. The light-shielding body has a first end surface and a second end surface opposite to the first end surface, and the light-shielding body defines a light-transmitting hole extending through the first end surface and the second end surface. The sawtooth structure is disposed on a wall of the light-transmitting hole, and a cross-section of the sawtooth structure taken along a direction perpendicular to a thickness direction of the light-shielding member is a sawtooth cross-section. The sawtooth cross-section has alternating peaks and valleys disposed in a circumferential direction of the light-transmitting hole. The sawtooth cross-section has a first sawtooth edge and a second sawtooth edge between two adjacent peaks, the first sawtooth edge and the second sawtooth edge are disposed at an included angle and are both connected to a valley, and an extending direction of the first sawtooth edge is directed to a center of the light-transmitting hole.

According to the first aspect, in some embodiments of the first aspect, the sawtooth cross-section has a rounded corner at each of the peaks and/or each of the valleys, and a radius of the rounded corner ranges from 0.001mm to 0.1mm.

According to the first aspect, in some embodiments of the first aspect, the sawtooth cross-section has a third sawtooth edge between two adjacent peaks, the third sawtooth edge is connected to one end of the second sawtooth edge close to the valley, and the third sawtooth edge deflects towards the first sawtooth edge relative to the second sawtooth edge.

According to the first aspect, in some embodiments of the first aspect, a length of the third sawtooth edge is greater than a length of the second sawtooth edge.

According to the first aspect, in some embodiments of the first aspect, between two adjacent peaks, an included angle between the second sawtooth edge and the first sawtooth edge is a first included angle, and an included angle between the third sawtooth edge and the first sawtooth edge is a second included angle. An opening of the first included angle and an opening of the second included angle face a same direction, and the first included angle is greater than the second included angle.

According to the first aspect, in some embodiments of the first aspect, the first included angle ranges from 10° to 70°, and the second included angle ranges from 10° to 30°.

According to the first aspect, in some embodiments of the first aspect, the sawtooth structure has multiple tooth blocks, and the multiple tooth blocks are disposed on the wall of the light-transmitting hole. Each of the multiple tooth blocks has a first surface and a second surface, and the first surface and the second surface are disposed opposite to each other in the thickness direction of the light-shielding member. The first surface is located at an object side of the light-shielding member, and the first surface is obliquely disposed toward the second surface from an edge of the light-transmitting hole to a middle part of the light-transmitting hole.

According to the first aspect, in some embodiments of the first aspect, in a radial direction of the light-shielding member, a distance between a peak and a valley adjacent to the peak ranges from 0.03mm to 0.3mm.

In a second aspect, embodiments of the disclosure provide a camera module. The camera module includes a lens barrel, multiple lenses, and the light-shielding member described above. The multiple lenses are stacked in an optical axis direction of the camera module and are disposed inside the lens barrel at intervals, and the light-shielding member is disposed between two adjacent lenses. Therefore, since the camera module includes the light-shielding member described above, the camera module can effectively eliminate stray light, which leads to excellent imaging quality of the camera module.

In a third aspect, embodiments of the disclosure provide an electronic device. The electronic device includes the camera module described above. Since the camera module possesses excellent imaging quality, the photographing performance of the electronic device is ensured.

On one hand, the light-shielding member provided in the disclosure includes the sawtooth structure in the light-transmitting hole of the light-shielding body, and the cross-section of the sawtooth structure taken along the direction perpendicular to the thickness direction of the light-shielding member is the sawtooth cross-section, where the sawtooth cross-section has alternating peaks and valleys disposed in the circumferential direction of the light-transmitting hole. In this way, incident light emitted to different positions of the sawtooth structure may be reflected at different angles, thereby effectively dispersing the stray light. As a result, the light-shielding member is in a better position to suppress and eliminate the stray light. On the other hand, the sawtooth cross-section has the first sawtooth edge and the second sawtooth edge between two adjacent peaks, the first sawtooth edge and the second sawtooth edge are disposed at an included angle and are both connected to the valley, and the extending direction of the first sawtooth edge is directed to the center of the light-transmitting hole. In this way, with the sawtooth structure, the stray light at the peaks may be shielded and eliminated while allowing minimal stray light at the valleys, thereby improving the stray light reduction effect of the sawtooth structure of the light-shielding member and improving the imaging quality. Additionally, the sawtooth structure maintains sufficient structural strength, which makes the sawtooth structure uneasy to deform during transportation and assembly, thereby improving the light-shielding effect of the light-shielding member.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic structural view of an electronic device provided in an embodiment of the disclosure.
FIG. 2 is a cross-sectional view of a camera module of the electronic device in FIG. 1.
FIG. 3 is a schematic structural view of a light-shielding member provided in an embodiment of the disclosure.
FIG. 4 is a cross-sectional view of the light-shielding member in FIG. 3, taken along a direction perpendicular to a thickness direction of the light-shielding member.
FIG. 5 is an enlarged view of the light-shielding member in FIG. 4 at portion I.
FIG. 6 is a stray light simulation diagram of a light-shielding member in a comparative embodiment, where the light-shielding member has a wavy sawtooth structure.
FIG. 7 is a stray light simulation diagram of a light-shielding member in a comparative embodiment, where the light-shielding member has a sawtooth structure with all sawtooth edges extending in a direction deviating from a center of a light-transmitting hole.
FIG. 8 is a stray light simulation diagram of the light-shielding member in FIG. 3, where the light-shielding member has a sawtooth structure with all first sawtooth edges extending in a direction directed to a center of a light-transmitting hole.
FIG. 9 is an enlarged view of the light-shielding member in FIG. 3 at portion II.
FIG. 10 is a schematic structural view of a light-shielding member provided in an embodiment of the disclosure.
FIG. 11 is a partial cross-sectional view of the light-shielding member in FIG. 10, taken along a direction perpendicular to a radial direction of the light-shielding member.
FIG. 12 is a cross-sectional view of a light-shielding member provided in an embodiment of the disclosure, taken along the thickness direction of the light-shielding member.
FIG. 13 is an enlarged view of the light-shielding member in FIG. 12 at portion III.

Main reference signs: electronic device-100; housing-10; camera module-20; display screen-30; lens barrel-1; accommodating space-101; light through-hole-102; supporting stair-11; lens-2; light-transmitting portion-21; supporting portion-22; light-shielding member-3; light-shielding body-5; light-transmitting hole-501; center-5010; first region-5011; second region-5012; first end surface-51; second end surface-52; sawtooth structure-6; tooth block-601; first surface-6011; second surface-6012; first side surface-6013; second side surface-6014; first rounded-corner-surface-6015; second rounded-corner-surface-6016; sawtooth groove-602; chamfer-603; sawtooth cross-section-610; peak-61; valley-62; rounded corner-63; first sawtooth edge-64; second sawtooth edge-65; third sawtooth edge-66; first included angle-α; second included angle-β; thickness direction-X; circumferential direction-Y; radial direction-Z.

The disclosure will be further described in the following specific embodiments in combination with the accompanying drawings.

### DETAILED DESCRIPTION

The following will illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

It is to be understood that, the terms in the description, claims, and the accompanying drawings of the disclosure are merely for describing specific embodiments, and are not intended to limit the disclosure. The terms "first", "second", and the like in the description, claims, and the accompanying drawings of the disclosure are used to distinguish different objects, rather than to describe a specific order. The singular forms "a" and "the" are intended to include a plural form, unless the context clearly dictates otherwise. The term "comprise" and any variations thereof are intended to cover non-exclusive inclusion. In addition, the disclosure can be implemented in many various forms, and is not limited to embodiments described herein. The following specific embodiments are provided for better and throughout understanding of the disclosure, where words "up", "down", "left", "right", or the like that indicate orientations refer to the position of a structure illustrated in the corresponding drawing. It is noted that, in the description of the disclosure, terms "install", "couple", "connect", and "disposed... on" should be understood in a broad sense unless otherwise expressly specified and limited. For example, these terms may refer to fixedly connect, detachably connect, or integrally connect; these terms may refer to mechanically connect, directly connect, indirectly connect through an intermediate medium, or an intercommunicate interiors of two elements. For those of ordinary skill in the art, the specific meanings of the above terms in the disclosure can be understood according to specific situations.

The specification hereinafter describes preferred embodiments for implementing the present disclosure. However, the foregoing description is for the purpose of illustrating the general principles of the present disclosure and is not intended to limit the scope of the present disclosure. The protection scope of the present disclosure shall be as defined in the appended claims.

Basic concepts involved in the embodiments of the disclosure will be briefly introduced in the following.

The term "rounded corner" refers to an arc that replaces original included angle and tangent to two sawtooth edges of the included angle. The size of the rounded corner is represented by a radius of the arc.

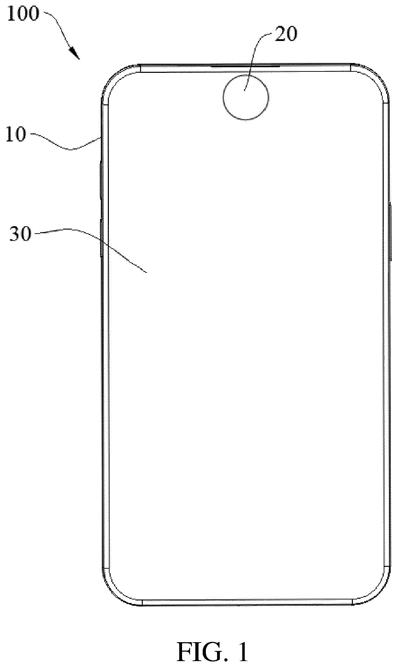

Reference is made to FIG. 1, which is a schematic structural view of an electronic device 100 provided in an embodiment of the disclosure. The electronic device 100 may include but is not limited to devices with a camera module 20, such as a mobile phone, a tablet, a digital camera, a multimedia player, an e-book reader, a laptop, a vehicle-mounted device, or a wearable device. It is to be understood that, in order to provide those skilled in the art with a better understanding of the electronic device 100, the electronic device 100 being a mobile phone is taken as an example in the disclosure for detailed description. It is to be noted that electronic device 100 being a mobile phone is for illustrative purposes only, and the electronic device 100 is not specifically limited in the disclosure. For example, the product type of the electronic device 100 may be determined according to actual needs.

Exemplarily, the electronic device 100 includes a housing 10, the camera module 20, and a display screen 30. The display screen 30 is mounted on the front side of the housing 10, and the camera module 20 is mounted inside the housing 10 and exposed out of the display screen 30. Specifically, the housing 10 is in sealed and fixed connection with the display screen 30, so as to encapsulate the camera module 20. The camera module 20 is accommodated in an accommodating space defined between the housing 10 and the display screen 30. A lens of the camera module 20 is exposed out of the display screen 30 and serves as a front-facing camera. The camera module 20 may be disposed inside the electronic device 100 and serve as a camera. Photographing function or video-recording function of the electronic device 100 is achieved through the camera module 20. The camera module 20 has high imaging quality, thereby ensuring the photographing performance of the electronic device 100. However, in other embodiments, the camera module 20 may be mounted inside the housing 10 and exposed out of the back of the housing 10, i.e., the camera module 20 is disposed facing away from the display screen 30 and serves as a rear-facing camera.

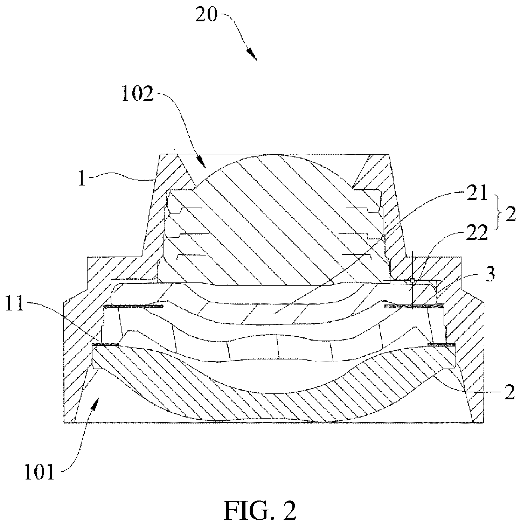

Reference is made to FIG. 2, which is a cross-sectional view of the camera module 20 of the electronic device 100 in FIG. 1. The camera module 20 includes a lens barrel 1, multiple lenses 2, and a light-shielding member 3. The multiple lenses 2 are stacked in the optical axis direction of the camera module 20 and are disposed inside the lens barrel 1 at intervals. The light-shielding member 3 is disposed between two adjacent lenses 2. The light-shielding member 3 is used to disperse the strong light and shield the stray light, ensuring good imaging quality of the camera module 20.

It is to be noted that, FIG. 2 is only for schematically describing the arrangement of the lens barrel 1, the multiple lenses 2, and the light-shielding member 3, rather than specifically limiting the connection positions, connection relationships, and specific structures of the components. FIG. 2 merely illustrates a structure of the camera module 20 provided in the embodiment of the disclosure and is not construed as a specific limitation to the camera module 20. In other embodiments of the disclosure, the camera module 20 may include more or fewer components than those illustrated in FIG. 2, or may combine certain components, or may include different components. For example, the camera module 20 may include, but not limited to a filler, a limiting component, etc.

Exemplarily, in this embodiment, the lens barrel 1 is of a cylindrical structure. An accommodating space 101 is defined inside the lens barrel 1. A light through-hole 102 that connects the external environment with the accommodating space 101 is defined on the top of the lens barrel 1. A supporting stair 11 is disposed on an inner side wall of the lens barrel 1. Multiple lenses 2 and the light-shielding member 3 are disposed inside the accommodating space 101. Each lens 2 includes a light-transmitting portion 21 and a supporting portion 22. The light-transmitting portion 21 corresponds to the light through-hole 102, so that external light can enter the light through-hole 102 and pass through optical components such as the light-transmitting portions 21 of the multiple lenses 2 in sequence. The supporting portion 22 is disposed around the edge of the light-transmitting portion 21 and cooperates with the supporting stair 11. The light-shielding member 3 defines a light-transmitting hole 501 corresponding to the light-transmitting portion 21.

In a possible embodiment, the light-shielding member 3 may have a metal light-shielding structure. On one hand, the surface of the metal light-shielding structure is not easily scratched or abraded. The metal light-shielding structure has high structural strength, which is less prone to deformation. During assembly, the metal light-shielding structure will not deform due to excessive assembly pressure. On the other hand, since the metal light-shielding structure has a certain weight, position deviation will not occur due to static electricity. However, in another possible implementation, the light-shielding member 3 may have a plastic light-shielding structure. On one hand, production cost may be reduced with the plastic light-shielding structure. On the other hand, since the plastic light-shielding structure possesses certain flexibility, the light-shielding member 3 may be prevented from cracking during processing, thereby reducing the difficulty of processing the light-shielding member 3.

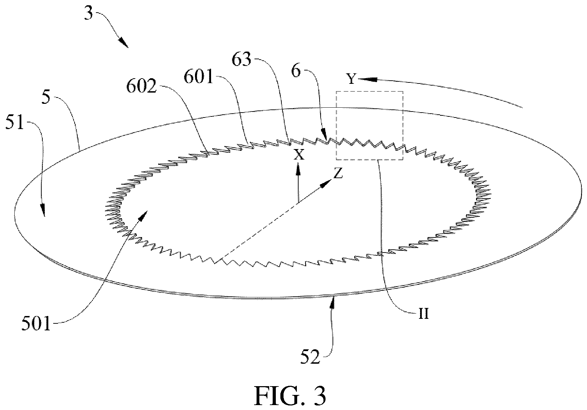

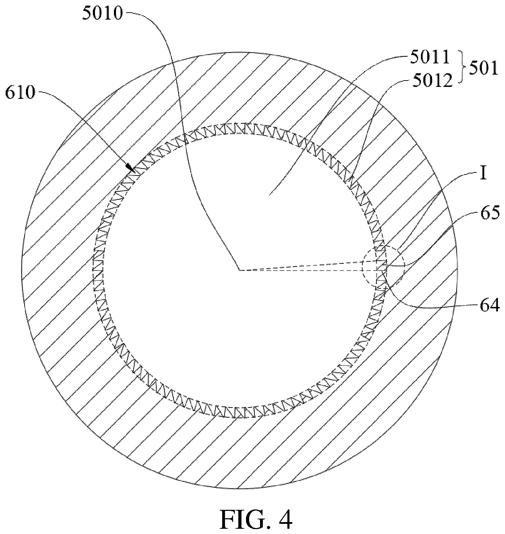

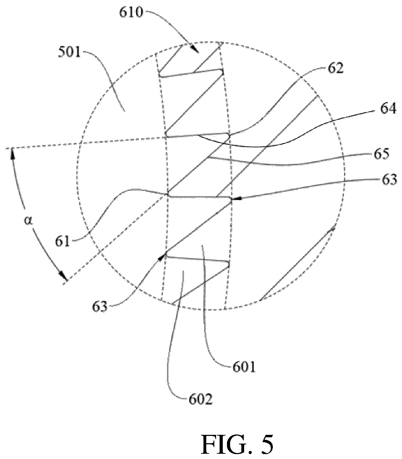

Reference is made to FIG. 3 to FIG. 5. FIG. 3 is a schematic structural view of a light-shielding member 3 provided in an embodiment of the disclosure. FIG. 4 is a cross-sectional view of the light-shielding member 3 in FIG. 3, taken along a direction perpendicular to a thickness direction X of the light-shielding member 3. FIG. 5 is an enlarged view of the light-shielding member 3 in FIG. 4 at portion I. The light-shielding member 3 includes a light-shielding body 5 and a sawtooth structure 6. The light-shielding body 5 has a first end surface 51 and a second end surface 52 opposite to the first end surface 51, and the light-shielding body 5 defines a light-transmitting hole 501 extending through the first end surface 51 and the second end surface 52. The sawtooth structure 6 is disposed on a wall of the light-transmitting hole 501, and a cross-section of the sawtooth structure 6 taken along a direction perpendicular to a thickness direction X of the light-shielding member 3 is a sawtooth cross-section 610. The sawtooth cross-section 610 has alternating peaks 61 and valleys 62 disposed in a circumferential direction Y of the light-transmitting hole 501. The sawtooth cross-section 610 has a first sawtooth edge 64 and a second sawtooth edge 65 between two adjacent peaks 61, the first sawtooth edge 64 and the second sawtooth edge 65 are disposed at an included angle and are both connected to the valley 62, and an extending direction of the first sawtooth edge 64 is directed to a center 5010 of the light-transmitting hole 501.

On one hand, the light-shielding member 3 provided in the disclosure includes the sawtooth structure 6 in the light-transmitting hole 501 of the light-shielding body 5, and the cross-section of the sawtooth structure 6 taken along the direction perpendicular to the thickness direction X of the light-shielding member 3 is the sawtooth cross-section 610, where the sawtooth cross-section 610 has alternating peaks 61 and valleys 62 disposed in the circumferential direction Y of the light-transmitting hole 501. In this way, incident light emitted to different positions of the sawtooth structure 6 may be reflected at different angles, thereby effectively dispersing the stray light. As a result, the light-shielding member 3 is in a better position to suppress the stray light and eliminate the stray light. On the other hand, the sawtooth cross-section 610 has the first sawtooth edge 64 and the second sawtooth edge 65 between two adjacent peaks 61, the first sawtooth edge 64 and the second sawtooth edge 65 are disposed at an included angle and are both connected to the valley 62, and the extending direction of the first sawtooth edge 64 is directed to the center 5010 of the light-transmitting hole 501. In this way, with the sawtooth structure 6, the stray light at the peaks 61 may be shielded and eliminated while allowing minimal stray light at the valleys 62 of the sawtooth structure 6, thereby improving the stray light reduction effect of the sawtooth structure 6 of the light-shielding member 3 and improving the imaging quality. Additionally, the sawtooth structure 6 maintains sufficient structural strength, which makes the sawtooth structure 6 uneasy to deform during transportation and assembly, thereby improving the light-shielding effect of the light-shielding member 3.

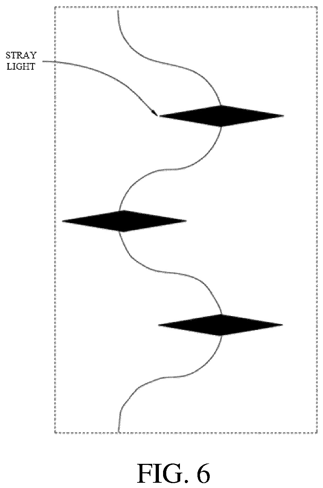

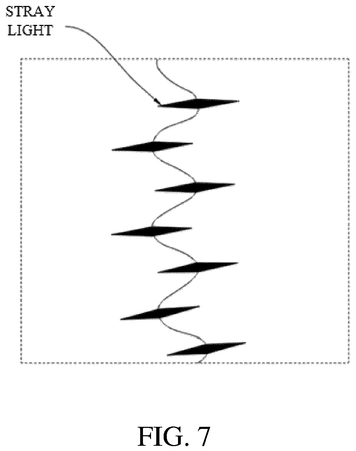

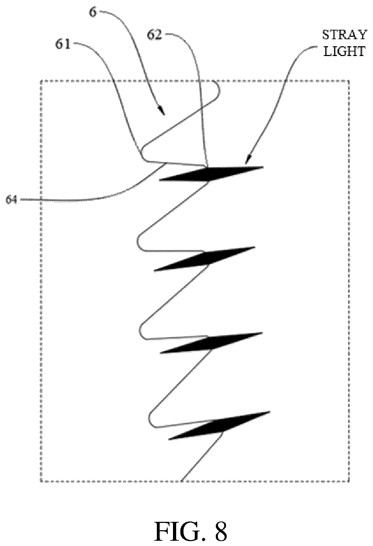

Reference is made to FIG. 2, FIG. 6, FIG. 7, and FIG. 8. FIG. 6 is a stray light simulation diagram of a light-shielding member 3 in a comparative embodiment, where the light-shielding member 3 has a wavy sawtooth structure. FIG. 7 is a stray light simulation diagram of a light-shielding member 3 in a comparative embodiment, where the light-shielding member 3 has a sawtooth structure 6 with all sawtooth edges extending in a direction deviating from a center 5010 of a light-transmitting hole 501. FIG. 8 is a stray light simulation diagram of the light-shielding member 3 in FIG. 3, where the light-shielding member 3 has a sawtooth structure 6 with all first sawtooth edges 64 extending in a direction directed to a center 5010 of a light-transmitting hole 501. As illustrated in FIG. 6 and FIG. 7, all the sawtooth edges of the sawtooth structure 6 extend in a direction deviating from the center 5010 of the light-transmitting hole 501, and the stray light is found at both the peaks 61 and the valleys 62 of the sawtooth structure 6. In addition, in a case where the sawtooth structure 6 is of a wavy shape, the radius of the rounded corners of the sawtooth structure 6 at the peaks 61 and the valleys 62 is large, resulting in a poor stray light elimination effect. In a case where the sawtooth structure 6 is of a sawtooth shape, the radius of the rounded corners of the sawtooth structure 6 at the peaks 61 and the valleys 62 is small, resulting in a better stray light elimination effect. It may be seen that, a smaller radius of the rounded corners of the sawtooth structure 6 at the peaks and the valleys corresponds to a better stray light elimination effect. As illustrated in FIG. 8, exemplarily, in this embodiment, the extending direction of the first sawtooth edge 64 of the sawtooth structure 6 is directed to the center 5010 of the light-transmitting hole 501, and the stray light is found at the valleys 62 of the sawtooth structure 6. The extending direction of the first sawtooth edge 64 is directed to the center 5010 of the light-transmitting hole 501, so that the sawtooth structure 6 can block and eliminate the stray light at the peaks 61, thereby improving the stray light reduction effect and improving the imaging quality.

In a possible embodiment, the first end surface 51, the second end surface 52, and the wall of the light-transmitting hole 501 of the light-shielding body 5 have light-shielding layers. The light-shielding layer may be a black light-shielding layer, which helps to eliminate the stray light and prevent the stray light from affecting the imaging quality of the camera module 20.

In some embodiments, the sawtooth cross-section 610 has rounded corners 63 at the peaks 61 and/or the valleys 62. The radius of the rounded corners 63 ranges from 0.001mm to 0.1mm, which makes the corners at the tips or roots of the sawtooth to be small. In this way, for the incident light emitted to the sawtooth structure 6, the reflectivity of the incident light reflected towards the center 5010 of the light-transmitting hole 501 may be reduced, and the light may be less likely to be reflected by the sawtooth structure 6 to the camera module 20 to cause imaging by a chip. Therefore, the stray light elimination effect of the light-shielding member 3 is improved, and the imaging quality of the camera module 20 is enhanced.

Exemplarily, in this embodiment, the sawtooth cross-section 610 has rounded corners 63 at the peaks 61 and valleys 62. The sawtooth cross-section 610 has multiple peaks 61 and multiple valleys 62. All the peaks 61 and all the valleys 62 have the rounded corners 63. In some embodiments, the sawtooth cross-section 610 may have the rounded corners 63 only at the peaks 61, or only at the valleys 62. The sawtooth cross-section 610 may have the rounded corners 63 at least at some of the peaks 61, at least at some of the valleys 62, or at least at some of both the peaks 61 and valleys 62.

It is to be understood that, in a case where the rounded corners 63 at the peaks 61 and/or the valleys 62 of the sawtooth structure 6 are large, the light emitted to the sawtooth structure 6 will lead to ripple-like or needle-like stray light at the sawtooth structure 6, resulting in poor stray light elimination effect, thereby affecting the imaging quality of the camera module 20. In a case where the rounded corners 63 at the peaks 61 and/or the valleys 62 of the sawtooth structure 6 are small, the difficulty of processing the sawtooth structure 6 increases. Exemplarily, in this embodiment, the sawtooth structure 6 may be produced using an etching process, which allows the radius of the rounded corners 63 of the sawtooth structure 6 at the peaks 61 and/or the valleys 62 to be small. Specifically, in a case where the sawtooth structure 6 is produced using the etching process to form the rounded corners 63 at the peaks 61 and/or the valleys 62, the radius of the rounded corners 63 may range from 0.001mm to 0.01mm, which results in small rounded corners 63 of the sawtooth structure 6 at the peaks 61 and/or the valleys 62. For example, the radius of the rounded corners 63 may be, but is not limited to, 0.001mm, 0.002mm, 0.004mm, 0.006mm, 0.008mm, or 0.01mm. Therefore, in the embodiment of the disclosure, the radius of the rounded corners 63 of the sawtooth structure 6 at the peaks 61 and/or the valleys 62 ranges from 0.001mm to 0.01mm. In this way, for the incident light emitted to the sawtooth structure 6, the reflectivity of the incident light reflected towards the center 5010 of the light-transmitting hole 501 is reduced, the stray light elimination effect of the light-shielding member 3 is improved, and the imaging quality of the camera module 20 is improved. In addition, the difficulty of processing the sawtooth structure 6 is reduced, and deformation of the sawtooth structure 6 due to stress during the processing may be prevented.

However, in a possible embodiment, the sawtooth structure 6 may also be produced using a punching process, which will not be specifically limited in embodiments of the disclosure. Specifically, in a case where the sawtooth structure 6 is produced using the punching process to form the rounded corners 63 at the peaks 61 and/or the valleys 62, the radius of the rounded corners 63 may range from 0.05mm to 0.1mm. For example, the radius of the rounded corners 63 may be, but is not limited to, 0.05mm, 0.06mm, 0.07mm, 0.08mm, 0.09mm, or 0.1mm.

In order to describe accurately, directional terms mentioned in the disclosure are all referred to FIG. 3 and FIG. 5. The term "thickness direction X" refers to an arrangement direction of the first end surface 51 and the second end surface 52 of the light-shielding body 5, and the thickness direction X is parallel to the central axis of the light-transmitting hole 501, which means vertically upwards and downwards. The term "circumferential direction Y" refers to an arrangement direction of the peaks 61 and the valleys 62 of the sawtooth structure 6, and the circumferential direction Y is parallel to a circumferential direction Y of the light-transmitting hole 501. The term "radial direction Z" refers to the direction of the radius of the light-transmitting hole 501. The thickness direction X, the circumferential direction Y, and the radial direction Z together form three orthogonal directions of the light-transmitting hole 501. For ease of description, the thickness direction X, the circumferential direction Y, and the radial direction Z in the disclosure represent relative positions and do not construe as a limitation to implementations. The thickness direction X, the circumferential direction Y, and the radial direction Z of the light-transmitting hole 501 may be customized based on the specific structure of the product and the viewing angles presented in the accompanying drawings, which is not limited in the disclosure.

Exemplarily, in this embodiment, the light-shielding body 5 has a sheet-like structure. The first end surface 51 and the second end surface 52 are disposed parallel to each other, that is, the first end surface 51 and the second end surface 52 are both perpendicular to the thickness direction X of the light-shielding body 5, ensuring a uniform strength throughout the light-shielding body 5, making the light-shielding body 5 less prone to deformation and easier to be processed. However, in some embodiments, the first end surface 51 and the second end surface 52 may be not parallel to each other. The light-transmitting hole 501 may have a constant radius structure, which means that the radius of the light-transmitting hole 501 remains unchanged in the thickness direction X of the light-shielding member 3. The light-transmitting hole 501 on the first end surface 51 overlaps with the light-transmitting hole 501 on the second end surface 52 in the thickness direction X of the light-shielding member 3, which helps to adjust the light-shielding effect of the light-shielding member 3. However, in some embodiments, the light-transmitting hole 501 may have a variable radius structure, which means that the radius of the light-transmitting hole 501 gradually decreases or increases in the thickness direction X of the light-shielding member 3. Detailed description is in the following embodiments.

Exemplarily, in this embodiment, the light-transmitting hole 501 is of a circular shape. However, in some embodiments, the light-transmitting hole 501 may be of an approximately circular shape or other shapes, such as racetrack-shape, oval shape, rectangular shape, etc. The disclosure does not specifically limit the shape of the light-transmitting hole 501. The light-shielding body 5 has a certain thickness, which allows the sawtooth structure 6 to be formed on the wall of the light-transmitting hole 501. The sawtooth structure 6 has multiple tooth blocks 601. A tooth groove 602 is formed between two adjacent tooth blocks 601. Multiple tooth blocks 601 are disposed obliquely in the circumferential direction Y of the light-transmitting hole 501, making the light incident at different positions of the sawtooth structure to be reflected at different angles, thereby effectively dispersing and eliminating the stray light. Therefore, the light-shielding effect of the light-shielding member 3 is effectively improved, and the imaging quality of the camera module 20 may be improved by disposing the light-shielding member 3 in the camera module 20. The tooth blocks 601 may be disposed either at intervals or adjacent to each other in the circumferential direction Y of the light-transmitting hole 501, and the tooth blocks 601 each have a pointed structure. The pointed structure can reflect the incident light in diffuse reflection, avoiding the issue of reflection, stray light, and glare at the light-transmitting hole 501 of the light-shielding member 3, which could otherwise affect the imaging quality of the camera module 20.

The light-shielding body 5 and the sawtooth structure 6 are integrally formed, which improves the connection strength and connection reliability between the light-shielding body 5 and the sawtooth structure 6, reduces the chance of deformation of the light-shielding member 3, and prevents the sawtooth structure 6 from shifting relative to the light-shielding body 5, which could otherwise affect the imaging quality of the camera module 20. In this embodiment, the sawtooth structure 6 is formed by stamping using a stamping mold, which is a simple manufacturing process with high production yield, good stability and consistency, meeting the requirements of stable mass production. Specifically, the sawtooth structure 6 is formed during the stamping process of the light-transmitting hole 501. By using a stamping mold of appropriate shape, the sawtooth structure 6 and the light-transmitting hole 501may be simultaneously formed by stamping using the stamping mold. However, the sawtooth structure 6 may also be formed on the wall of the light-transmitting hole 501 after the light-transmitting hole 501 is formed. In a possible embodiment, the sawtooth structure 6 may be formed by a cutting process. For example, the sawtooth structure 6 may be formed by laser cutting, which is a simple manufacturing process with high production yield, good stability and consistency, meeting the requirements of stable mass production. In another possible embodiment, the sawtooth structure 6 and the light-shielding body 5 are independently disposed and fixedly connected. The sawtooth structure 6 may be connected to the wall of the light-transmitting hole 501 through welding, bonding, snap-fitting, or other connecting processes.

Reference is again made to FIG. 2 to FIG. 5. The light-transmitting hole 501 includes a first region 5011 and a second region 5012 surrounding the first region 5011. The first region 5011 is defined as being in a middle part of the light-transmitting hole 501 and serving as an effective optical region for transmitting imaging light. The sawtooth structure 6 is located in the second region 5012, i.e., located outside the effective optical region, thereby preventing the imaging effect from being affected by stray shadow. When the light is emitted to the wall of the light-transmitting hole 501, the sawtooth structure 6 reflects the incident light in diffuse reflection, and the reflected light will not enter the effective optical region in the middle part of the light-transmitting hole 501. In this way, for the incident light emitted to the sawtooth structure 6, the reflectivity of the incident light reflected towards the center 5010 of the light-transmitting hole 501 is reduced, and interference of glare and other stray light caused by reflections at the wall of the light-transmitting hole 501 may be avoided, thereby ensuring the image effect and improving the quality of imaging products, and ultimately enhancing the imaging quality.

It is to be noted that, the center 5010 of the light-transmitting hole 501 refers to a geometric center 5010 of the light-transmitting hole 501, i.e., a position equally distant from all the edges of the light-transmitting hole 501. For example, when the light-transmitting hole 501 is of a circular shape, the center 5010 of the light-transmitting hole 501 refers to the circle center of the light-transmitting hole 501. The multiple tooth blocks 601 are obliquely disposed facing the same side in the circumferential direction Y of the light-transmitting hole 501. Specifically, that the extending direction of the first sawtooth edge 64 is directed to the center 5010 of the light-transmitting hole 501 means that the center 5010 of the light-transmitting hole 501 is located at the extension line of the first sawtooth edge 64, that is, the first sawtooth edge 64 extends in the radial direction Z of the light-transmitting hole 501. The extending direction of the second sawtooth edge 65 is deviated from the center 5010 of the light-transmitting hole 501, i.e., the center 5010 of the light-transmitting hole 501 is located outside the extension line of the second sawtooth edge 65. The second sawtooth edge 65 is obliquely disposed relative to the radial direction Z of the light-transmitting hole 501. The multiple second sawtooth edges 65 deflect towards the same side in the circumferential direction Y of the light-transmitting hole 501, thereby shortening the distance between two adjacent tooth blocks 601, reducing the reflectivity of the incident light reflected towards the center 5010 of the light-transmitting hole 501, and improving the imaging quality. Exemplarily, in this embodiment, the multiple second sawtooth edges 65 are deflected in the clockwise direction. However, in some embodiments, the multiple second sawtooth edges 65 are deflected in the counterclockwise direction.

Between two adjacent peaks 61, an included angle between the second sawtooth edge 65 and the first sawtooth edge 64 is a first included angle α. The first included angle α ranges from 10° to 70°. It is to be understood that, in a case where the first included angle α is large, the tooth groove 602 between two adjacent tooth blocks 601 is large, and the radius of the rounded corner 63 of the sawtooth cross-section 610 at the peak 61 is large. Therefore, the stray light is easy to be found at the sawtooth structure 6 after the light is emitted to the sawtooth structure 6, resulting in a poor stray light elimination effect. In a case where the first included angle α is small, the difficulty of processing the sawtoothed structure 6 is increased, and the root strength of the sawtooth structure 6 is reduced. Therefore, deformation of the sawtooth structure 6 may easily occur, and the imaging quality of the camera module 20 is affected. In the embodiment of the disclosure, the first included angle α is set ranging from 10° to 70°, so that the incident light may be reflected multiple times in the sawtooth structure 6. In this way, the stray light elimination effect of the light-shielding member 3 is improved, the structural strength of the sawtooth structure 6 is enhanced, thereby improving the imaging quality of the camera module 20. In addition, the difficulty of processing the sawtooth structure 6 is reduced, and deformation of the sawtooth structure 6 due to stress during the processing may be prevented. The first included angle α may be, but is not limited to, 10°, 20°, 30°, 40°, 50°, 60°, 70°, etc.

In the radial direction Z of the light-shielding member 3, a distance between the peak 61 and the valley 62 adjacent to each other ranges from 0.03mm to 0.3mm. It is to be understood that, in the radial direction Z of the light-shielding member 3, in a case where the distance between the peak 61 and the valley 62 adjacent to each other is large, the stray light is easy to be found at the sawtooth structure 6 after the light is emitted to the sawtooth structure 6, resulting in a poor stray light elimination effect. In addition, the structural strength of the sawtooth structure 6 is reduced, and the sawtooth structure 6 is prone to deformation, which affects the imaging quality of the camera module 20. In a case where a height difference between the peak 61 and the valley 62 adjacent to each other is small, the difficulty of processing the sawtoothed structure 6 is increased. In the embodiment of the disclosure, in the radial direction Z of the light-shielding member 3, the distance between the peak 61 and the valley 62 adjacent to each other ranges from 0.03mm to 0.3mm, so that the incident light may be reflected multiple times in the sawtooth structure 6. In this way, the stray light elimination effect of the light-shielding member 3 is improved, the structural strength of the sawtooth structure 6 is enhanced, thereby improving the imaging quality of the camera module 20. In addition, the difficulty of processing the sawtooth structure 6 is reduced, and deformation of the sawtooth structure 6 due to stress during the processing may be prevented. In the radial direction Z of the light-shielding member 3, the distance between the peak 61 and the valley 62 adjacent to each other may be, but is not limited to, 0.03 mm, 0.06 mm, 0.09 mm, 0.12 mm, 0.15 mm, 0.18 mm, 0.21 mm, 0.24 mm, 0.27 mm, 0.3 mm, etc.

It is to be noted that, the first included angle α and the distance between the peak 61 and the valley 62 adjacent to each other in the radial direction Z of the light-shielding member 3 may be set according to actual requirements, the size of the light-shielding member 3, and the size of the light-transmitting hole 501, which is not specifically limited in embodiments of the disclosure.

It is to be noted that, a distance between two adjacent peaks 61 or a distance between two adjacent valleys 62 is referred to as a period, and a size of the period may be designed according to actual situations, which is not specifically limited in embodiments of the disclosure.

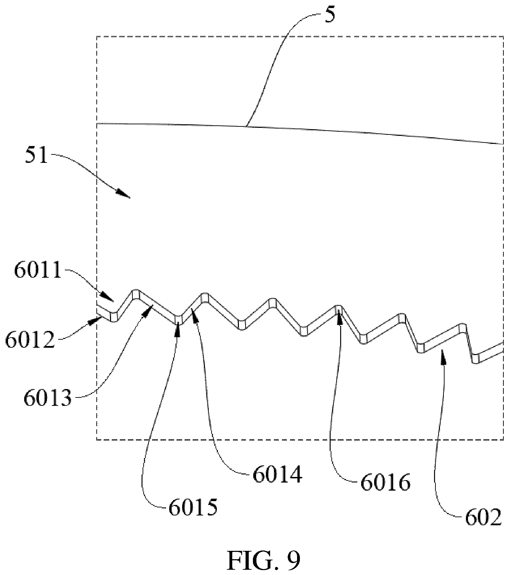

Reference is made to FIG. 3 and FIG. 9. FIG. 9 is an enlarged view of the light-shielding member 3 in FIG. 3 at portion II. The tooth block 601 has a first surface 6011, a second surface 6012, a first side surface 6013, a second side surface 6014, a first rounded-corner-surface 6015, and a second rounded-corner-surface 6016. The first surface 6011 and the second surface 6012 are opposite to each other, and the first side surface 6013 and the second side surface 6014 are connected between the first surface 6011 and the second surface 6012. One side of the first side surface 6013 away from the light-shielding body 5 is connected to one side of the second side surface 6014 away from the light-shielding body 5 through the first rounded-corner-surface 6015, and one side of the first side surface 6013 close to the light-shielding body 5 is connected to one side of the second side surface 6014 close to the light-shielding body 5 through the second rounded-corner-surface 6016.

Exemplarily, in this embodiment, the first surface 6011 and the second surface 6012 are disposed in parallel, and the first surface 6011 is connected to and flush with the first end surface 51, that is, the first surface 6011 and the first end surface 51 are disposed in the same plane. The second surface 6012 is connected to and flush with the second end surface 52, and the second surface 6012 and the second end surface 52 are disposed in the same plane. In this way, the light-shielding member 3 is easy to be processed and formed, the overall structural strength of the tooth block 601 is improved, thereby preventing the elimination or suppression of the stray light from being affected due to deformation of the tooth block 601.

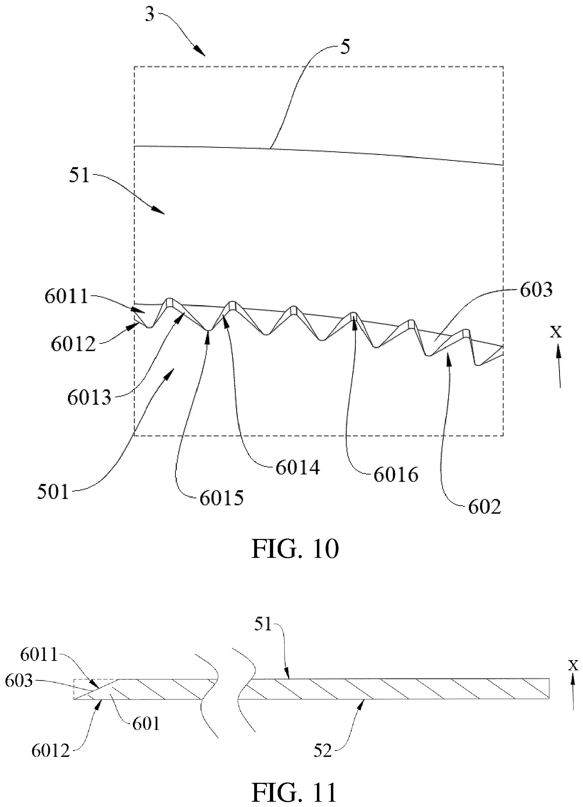

Reference is made to FIG. 9, FIG. 10, and FIG. 11. FIG. 10 is a schematic structural view of a light-shielding member 3 provided in an embodiment of the disclosure. FIG. 11 is a partial cross-sectional view of the light-shielding member 3 in FIG. 10, taken along a direction perpendicular to the radial direction Z of the light-shielding member 3. The structure of the light-shielding member 3 of the embodiment corresponding to FIG. 10 is similar to the structure of the light-shielding member 3 of the embodiment corresponding to FIG. 3, and the difference between these two light-shielding members is in the following. In the embodiment corresponding to FIG. 10, the light-shielding member 3 has multiple tooth blocks 601, and the multiple tooth blocks 601 are disposed on the wall of the light-transmitting hole 501. Each of the multiple tooth blocks 601 has a chamfer 603 on an object side of the light-shielding member 3. Specifically, each of the multiple tooth blocks 601 has a first surface 6011 and a second surface 6012. The first surface 6011 and the second surface 6012 are disposed opposite to each other in the thickness direction X of the light-shielding member 3. The first surface 6011 is located at the object side of the light-shielding member 3, and the first surface 6011 is obliquely disposed toward the second surface 6012 from an edge of the light-transmitting hole 501 to a middle part of the light-transmitting hole 501. In the thickness direction X of the light-shielding member 3, the distance between the first surface 6011 and the second surface 6012 gradually decreases from the edge of the light-transmitting hole 501 to the middle part of the light-transmitting hole 501. It is to be noted that, in a case where the light-shielding member 3 is applied to the camera module 20, the object side is a side facing the light-incident side, and the image side is a side facing the light-exiting side. Therefore, on one hand, the light is reflected towards the object side of the light-shielding member 3, thereby improving the stray light reduction effect, and thus improving the imaging quality of the camera module 20. On the other hand, the root of the tooth block 601 has high structural strength, thereby preventing the elimination or suppression of the stray light from being affected due to deformation of the tooth block 601. On yet another hand, the area of the first rounded-corner-surface 6015 of the tooth block 601 is reduced, and the reflection optical path is changed, thereby improving the stray light reduction effect, and thus improving the imaging quality of the camera module 20. The other structures of the light-shielding member 3 in the embodiment corresponding to FIG. 10 may refer to the detailed description of the light-shielding member 3 in the embodiment corresponding to FIG. 3, which will not be repeated herein.

Specifically, and exemplarily, in this embodiment, the first surface 6011 of the tooth block 601 is disposed at an included angle to the second surface 6012 of the tooth block 601, and the first surface 6011 is disposed at an included angle to the first end surface 51 of the light-shielding body 5. The second surface 6012 is connected to and flush with the second end surface 52. However, in some embodiments, the first surface 6011 is disposed at an included angle to the second surface 6012, and the second surface 6012 may be disposed at an included angle to the second end surface 52 as well. Alternatively, the first surface 6011 is connected to and flush with the second surface 6012, and the second surface 6012 may be disposed at an included angle to the second end surface 52 as well. The first surface 6011 may be a curved surface or a flat surface.

The first side surface 6013, the second rounded-corner-surface 6016, and the second side surface 6014 are sequentially connected in the circumferential direction Y of the light-shielding member 3 and together define a tooth groove 602. Specifically, the second rounded-corner-surface 6016 serves as a groove bottom wall of the tooth groove 602, and the first side surface 6013 and the second side surface 6014 serve as groove side walls of the tooth groove 602. In a possible realization, the groove bottom wall of the tooth groove 602 is obliquely disposed in a direction from the image side to the object side of the light-shielding member 3, so that the light may be reflected by the groove bottom wall of the tooth groove 602 to one side away from the light-emitting side, thereby reducing or eliminating stray light, and improving the imaging quality of the camera module 20. Specifically, the distance between the groove side walls of the tooth groove 602 and the center 5010 of the light-transmitting hole 501 gradually increases in the direction from the image side to the object side of the light-shielding member 3.

In one possible embodiment, the thickness of the tooth block 601 of the sawtooth structure 6 gradually decreases from one side of the sawtooth structure 6 close to the light-shielding body 5 to one side of the sawtooth structure 6 away from the light-shielding body 5. Therefore, on one hand, the root of the tooth block 601 has high structural strength, thereby preventing the elimination or suppression of the stray light from being affected due to deformation of the light-shielding member 3. On the other hand, reflective areas of the first side surface 6013 and the second side surface 6014 of the tooth block 601 are reduced, and the reflection optical path is changed, thereby reducing or eliminating the stray light and improving the imaging quality of the camera module 20.

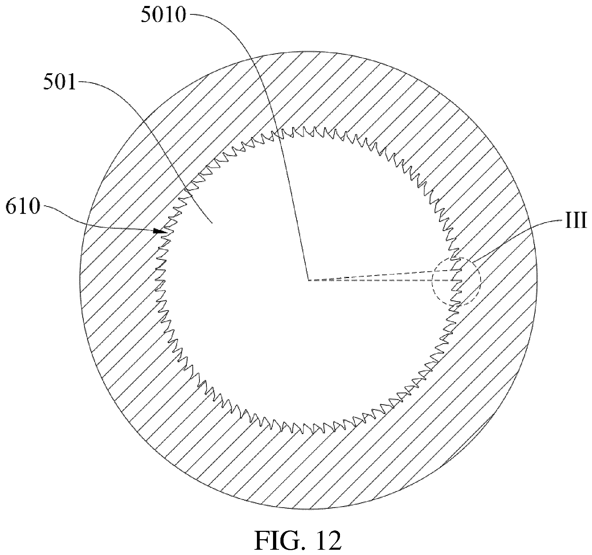

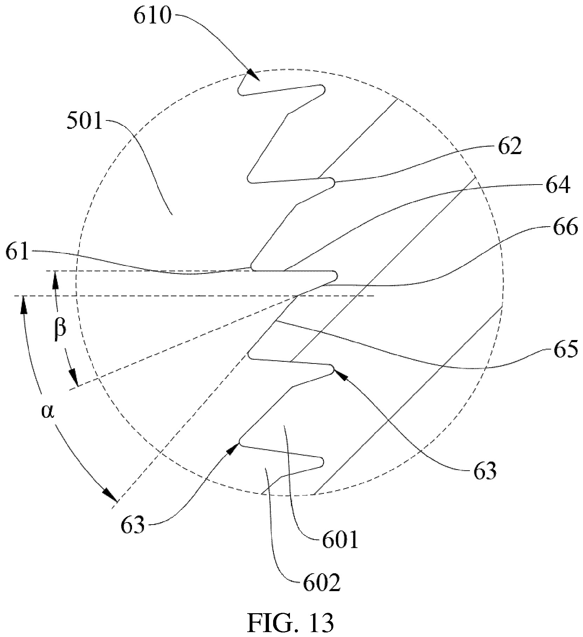

Reference is made to FIG. 12 and FIG. 13. FIG. 12 is a cross-sectional view of a light-shielding member 3 provided in an embodiment of the disclosure, taken along the thickness direction of the light-shielding member 3. FIG. 13 is an enlarged view of the light-shielding member 3 in FIG. 12 at portion III. The structure of the light-shielding member 3 in the embodiment corresponding to FIG. 12 is similar to the structure of the light-shielding member 3 in the embodiment corresponding to FIG. 3. The difference between these two light-shielding members 3 lies in that the tooth block 601 has a shark tooth structure in the embodiment corresponding to FIG. 12. Specifically, the sawtooth cross-section 610 has a third sawtooth edge 66 between two adjacent peaks 61, the third sawtooth edge 66 is connected to one end of the second sawtooth edge 65 close to the valley 62, that is, the third sawtooth edge 66 is connected between the second sawtooth edge 65 and the valley 62. The third sawtooth edge 66 deflects towards the first sawtooth edge 64 relative to the second sawtooth edge 65. Therefore, on one hand, the structural strength of the tooth block 601 at the root is increased, and the sawtooth structure 6 is less likely to be deformed and damaged, thereby improving the imaging quality of the camera module 20. On the other hand, the third sawtooth edge 66 extends at an end portion of the second sawtooth edge 65, so that the light is less likely to be emitted to the first sawtooth edge 64, and the light reflected by the first sawtooth edge 64 may be directed to a direction of the wall of the light-transmitting hole 501. In this way, for the incident light emitted to the sawtooth structure 6, the reflectivity of the incident light reflected towards the center 5010 of the light-transmitting hole 501 is reduced, and interference of glare and other stray light caused by reflections at the wall of the light-transmitting hole 501 may be avoided, thereby ensuring the image effect and improving the quality of imaging products, and ultimately enhancing the imaging quality. In addition, the extending direction of the first sawtooth edge 64 is directed to the center 5010 of the light-transmitting hole 501. In this way, with the sawtooth structure 6, the stray light at the valley 62 may be shielded and eliminated while allowing minimal stray light at the peaks 61 of the sawtooth structure 6, thereby improving the stray light reduction effect of the sawtooth structure 6 of the light-shielding member 3 and improving the imaging quality.

It is to be noted that, other structures of the light-shielding member 3 in the embodiment corresponding to FIG. 12 may refer to the detailed description of the light-shielding member 3 in the embodiment corresponding to FIG. 3, which will not be repeated herein.

In the embodiment corresponding to FIG. 12, the length of the third sawtooth edge 66 is greater than the length of the second sawtooth edge 65. In this way, the structural strength of the tooth block 601 at the root is increased, and the sawtooth structure 6 is less likely to be deformed and damaged, thereby improving the imaging quality of the camera module 20.

Between two adjacent peaks 61, an included angle between the second sawtooth edge 65 and the first sawtooth edge 64 is a first included angle α, and an included angle between the third sawtooth edge 66 and the first sawtooth edge 64 is a second included angle β. An opening of the first included angle α and an opening of the second included angle β face the same direction, and the first included angle α is greater than the second included angle β. Therefore, on one hand, the structural strength of the tooth block 601 at the root is increased, and the sawtooth structure 6 is less likely to be deformed and damaged, thereby improving the imaging quality of the camera module 20. On the other hand, the third sawtooth edge 66 extends at the end portion of the second sawtooth edge 65, so that the light is less likely to be emitted to the first sawtooth edge 64, and the light reflected by the first sawtooth edge 64 may be directed to the direction of the wall of the light-transmitting hole 501. In this way, for the incident light emitted to the sawtooth structure 6, the reflectivity of the incident light reflected towards the center 5010 of the light-transmitting hole 501 is reduced, and interference of glare and other stray light caused by reflections at the wall of the light-transmitting hole 501 may be avoided, thereby ensuring the image effect and improving the quality of imaging products, and ultimately enhancing the imaging quality.

The first included angle α ranges from 10° to 70°. It is to be understood that, in a case where the first included angle α is large, the tooth groove 602 between two adjacent tooth blocks 601 is large, and the radius of the rounded corner 63 of the sawtooth cross-section 610 at the valley 62 is large. Therefore, stray light is easy to be found at the sawtooth structure 6 after the light is emitted to the sawtooth structure 6, resulting in a poor stray light elimination effect. In a case where the first included angle α is small, the difficulty of processing the sawtoothed structure 6 is increased, and the root strength of the sawtooth structure 6 is reduced. Therefore, deformation of the sawtooth structure 6 may easily occur, and the imaging quality of the camera module 20 is affected. In the embodiment of the disclosure, the first included angle α ranges from 10° to 70°, so that the incident light may be reflected multiple times in the sawtooth structure 6. In this way, the stray light elimination effect of the light-shielding member 3 is improved, the structural strength of the sawtooth structure 6 is enhanced, thereby improving the imaging quality of the camera module 20. In addition, the difficulty of processing the sawtooth structure 6 is reduced, and deformation of the sawtooth structure 6 due to stress during the processing may be prevented. The first included angle α may be, but is not limited to, 10°, 20°, 30°, 40°, 50°, 60°, 70°, etc.

The second included angle β ranges from 10° to 30°. It is to be understood that, in a case where the second included angle β is large, the radius of the rounded corner 63 of the sawtooth cross-section 610 at the peak 61 is large. Therefore, stray light is easy to be found at the sawtooth structure 6 after the light is emitted to the sawtooth structure 6, resulting in a poor stray light elimination effect. In a case where the second included angle β is small, the difficulty of processing the sawtoothed structure 6 is increased, and the root strength of the sawtooth structure 6 is reduced. Therefore, deformation of the sawtooth structure 6 may easily occur, and the imaging quality of the camera module 20 is affected. In the embodiment of the disclosure, the second included angle β is set ranging from 10° to 70°, so that the incident light may be reflected multiple times in the sawtooth structure 6. In this way, the stray light elimination effect of the light-shielding member 3 is improved, the structural strength of the sawtooth structure 6 is enhanced, thereby improving the imaging quality of the camera module 20. In addition, the difficulty of processing the sawtooth structure 6 is reduced, deformation of the sawtooth structure 6 due to stress during the processing may be prevented. The second included angle β may be, but is not limited to, 10°, 20°, 30°, 40°, 50°, 60°, 70°, etc.

The foregoing describes embodiments of the disclosure in detail. In this specification, specific examples are used to describe the principle and implementation manners of the present disclosure, and the description of the embodiments is only intended to help understand the method and core idea of the present disclosure. In addition, a person of ordinary skill in the art may, based on the idea of the present disclosure, make modifications with respect to the specific implementation manners and the application scope. Therefore, the content of this specification shall not be construed as a limitation to the present disclosure.

## Claims

1. A light-shielding member (3), comprising:
a light-shielding body (5), wherein the light-shielding body (5) has a first end surface (51) and a second end surface (52) opposite to the first end surface (51), and the light-shielding body (5) defines a light-transmitting hole (501) extending through the first end surface (51) and the second end surface (52); and
a sawtooth structure (6), wherein the sawtooth structure (6) is disposed on a wall of the light-transmitting hole (501), and a cross-section of the sawtooth structure (6) taken along a direction perpendicular to a thickness direction of the light-shielding member (3) is a sawtooth cross-section (610); the sawtooth cross-section (610) has alternating peaks (61) and valleys (62) disposed in a circumferential direction of the light-transmitting hole (501); the sawtooth cross-section (610) has a first sawtooth edge (64) and a second sawtooth edge (65) between two adjacent peaks (61), the first sawtooth edge (64) and the second sawtooth edge (65) are disposed at an included angle and are both connected to a valley (62), and an extending direction of the first sawtooth edge (64) is directed to a center (5010) of the light-transmitting hole (501).

2. The light-shielding member (3) of claim 1, wherein the sawtooth cross-section (610) has a rounded corner at each of the peaks (61) and/or each of the valleys (62), and a radius of the rounded corner ranges from 0.001mm to 0.1mm.

3. The light-shielding member (3) of claim 1, wherein the sawtooth cross-section (610) has a third sawtooth edge (66) between two adjacent peaks (61), the third sawtooth edge (66) is connected to one end of the second sawtooth edge (65) close to the valley (62), and the third sawtooth edge (66) deflects towards the first sawtooth edge (64) relative to the second sawtooth edge (65).

4. The light-shielding member (3) of claim 3, wherein a length of the third sawtooth edge (66) is greater than a length of the second sawtooth edge (65).

5. The light-shielding member (3) of claim 3, wherein between two adjacent peaks (61), an included angle between the second sawtooth edge (65) and the first sawtooth edge (64) is a first included angle (α), an included angle between the third sawtooth edge (66) and the first sawtooth edge (64) is a second included angle (β), an opening of the first included angle (α) and an opening of the second included angle (β) face a same direction, and the first included angle (α) is greater than the second included angle (β).

6. The light-shielding member (3) of claim 5, wherein the first included angle (α) ranges from 10° to 70°, and the second included angle (β) ranges from 10° to 30°.

7. The light-shielding member (3) of any one of claims 1 to 6, wherein the sawtooth structure (6) has a plurality of tooth blocks (601), and the plurality of tooth blocks (601) are disposed on the wall of the light-transmitting hole (501); each of the plurality of tooth blocks (601) has a first surface (6011) and a second surface (6012), and the first surface (6011) and the second surface (6012) are disposed opposite to each other in the thickness direction of the light-shielding member (3); and the first surface (6011) is located at an object side of the light-shielding member (3), and the first surface (6011) is obliquely disposed toward the second surface (6012) from an edge of the light-transmitting hole (501) to a middle part of the light-transmitting hole (501).

8. The light-shielding member (3) of any one of claims 1 to 7, wherein a thickness of the sawtooth structure (6) gradually decreases from one side of the sawtooth structure (6) close to the light-shielding body (5) to one side of the sawtooth structure (6) away from the light-shielding body (5).

9. The light-shielding member (3) of any one of claims 1 to 6, wherein in a radial direction of the light-shielding member (3), a distance between a peak (61) and a valley (62) adjacent to the peak (61) ranges from 0.03mm to 0.3mm.

10. The light-shielding member (3) of claim 1, wherein the light-transmitting hole (501) comprises a first region (5011) and a second region (5012) surrounding the first region (5011), the first region (5011) is in a middle part of the light-transmitting hole (501), and the sawtooth structure 6 is located in the second region (5012).

11. A camera module (20), comprising a lens barrel (1), a plurality of lenses (2), and the light-shielding member (3) of any one of claims 1 to 10, wherein the plurality of lenses (2) are stacked in an optical axis direction of the camera module (20) and are disposed inside the lens barrel (1) at intervals, and the light-shielding member (3) is disposed between two adjacent lenses (2).

12. The camera module (20) of claim 11, wherein an accommodating space (101) is defined inside the lens barrel (1), and the plurality of lenses (2) and the light-shielding member (3) are disposed inside the accommodating space (101).

13. The camera module (20) of claim 12, wherein the lens barrel (1) defines a light through-hole (102) on top of the lens barrel (1), and the light through-hole (102) connects an external environment with the accommodating space (101).

14. The camera module (20) of any one of claims 11 to 13, wherein the lens barrel (1) is provided with a supporting stair (11) on an inner side wall of the lens barrel (1), each of the plurality of lenses (2) comprises a light-transmitting portion (21) and a supporting portion (22), and the supporting portion (22) is disposed around an edge of the light-transmitting portion (21) and cooperates with the supporting stair (11).

15. An electronic device (100), comprising the camera module (20) of any one of claims 11 to 14.
